# EUROPEAN PATENT SPECIFICATION

(11) **EP 4 199 328 B1**
(45) Date of publication and mention of the grant of the patent: **09.12.2026**
(21) Application number: 21215297.9
(22) Date of filing: 16.12.2021
(51) Int. Cl.: H02K 15/00

(54) **METHOD OF MANUFACTURING A STATOR ASSEMBLY**
VERFAHREN ZUR HERSTELLUNG EINER STATORANORDNUNG
PROCÉDÉ DE FABRICATION D'UN ENSEMBLE STATOR

(43) Date of publication of application: 21.06.2023
(73) Proprietor: Hamilton Sundstrand Corporation, Charlotte, NC 28217-4578 (US)
(72) Inventor: SANGHA, Parminder Singh, Solihull, West Midlands B93 8SY (GB); PAGE, Andrew E, Tring, Hertfordshire HP23 4QD (GB)
(74) Representative: Dehns

(56) References cited:
- EP-A1- 3 683 940
- WO-A1-2021/200743
- WO-A1-2021/219489
- JP-A- 2015 076 969
- US-A1- 2013 200 743
- US-A1- 2020 280 229

## Description

### FIELD

This disclosure relates to a method of manufacturing a stator assembly for an electric machine.

### BACKGROUND

Stator assemblies for electric motors and generators include a plurality of windings formed from wire. High performance motors may consist of tens of stator windings. An AC voltage supply is connected to the windings such that the windings generate a magnetic field. Different phases of the AC voltage supply are connected to different windings around the stator so as to interact with magnets on the rotor and cause the rotor to rotate.

Windings connected to the same phase of the AC voltage supply may be linked by busbars. Such busbars are attached to the windings during manufacture of the stator assembly.

EP 3,683,940 A1 discloses a method of manufacturing a stator assembly for an electric motor or generator, comprising: providing a plurality of stator windings, each stator winding formed from a multistrand cable that comprises a plurality of wires that are electrically insulated, connecting an end of the multistrand cable of each stator winding to a respective conductive stud and then mounting the stator windings in a stator housing.

WO 2021/219489 A1 discloses a stator for an electric machine. The stator comprises a stator core, at least two grooves which are arranged in the stator core, an electric winding which comprises at least two dimensionally stable electric conductors, and at least one wiring element on at least one face of the stator core. A plurality of wiring elements may be assembled into a rigid busbar assembly before connecting it to terminals of stator conductors.

US 2013/200743 A1 discloses a stator for a rotary electric machine that includes: a cylindrical stator core with plural slots formed at an inner circumferential surface; a plurality of coil segments received by the slots; a plurality of first coil end plates electrically connected with the coil segments on either one of end surfaces of the stator core; and a plurality of second coil end plates electrically connected with the coil segments on the other end surface of the stator core.

Improvements in such manufacturing methods are desirable.

### SUMMARY

According to the invention, there is provided a method of manufacturing a stator assembly for an electric machine in accordance with claim 1. Further embodiments of the invention are defined in the dependent claims 2-11.

The disclosure also extends to a stator assembly manufactured according to the above method. It will be appreciated that all of the features described herein relating to the method of manufacturing the stator assembly apply equally to the stator assembly, and vice versa.

The method of manufacturing a stator assembly for an electric machine includes the steps of providing multiple stator windings that are each (electrically) connected to a conductive terminal. The conductive terminals are used to (electrically) connect to busbars, which link up the stator windings. Multiple busbars are assembled into a busbar assembly, with the busbars being arranged flexibly relative to each other in the assembly, before the busbar assembly is connected to multiple of the conductive terminals.

Thus, by arranging the busbars flexibly relative to each other in the busbar assembly, the busbar assembly has greater compliance during the manufacturing process. This helps to make it easier, quicker and less error prone to align and fit the busbar assembly in the stator, when mechanically mating the busbar assembly to the conductive terminals of the stator windings, particularly when there is some misalignment in the conductive terminals. It will be appreciated that these considerations are especially important when the stator assembly has a large number of stator windings.

The flexibility of the busbar assembly may also help to reduce the force that has to be exerted on the busbar assembly when fitting it into place for connecting to the conductive terminals of the stator windings. This helps to protect the (e.g. insulation of the) stator windings, and thus helps to improve the reliability of the manufacturing process and the quality of the stator assembly.

The method comprises providing a plurality of stator windings, with each stator winding being connected to a (at least one, e.g. two) conductive terminal. In one embodiment each end of the (e.g. coil of the) stator winding is connected to a conductive terminal. In one embodiment the plurality of stator windings are preassembled, e.g. using concentrated or distributed winding coils, or from pre-formed segmented stator windings. Thus, for example, multiple coils may be wound together and, e.g., connected to common conductive terminal(s).

The plurality of stator windings may be provided in any suitable and desired arrangement. In one embodiment the plurality of stator windings comprises a plurality of copper windings or a plurality of Litz wire windings (formed from a multi-strand cable comprising a plurality of wires that are electrically insulated from each other). In one embodiment the plurality of stator windings comprises a plurality of windings comprising electrically insulated wire.

The stator assembly may comprise any suitable and desired number of stator windings (and thus associated conductive terminals). In one embodiment the stator assembly comprises at least 12 stator windings, e.g. at least 24 stator windings, e.g. at least 36 stator windings.

The stator windings may be arranged, and connected to the busbars of the busbar assembly, in any suitable and desired way in the stator assembly, e.g. dependent on the number of phases with which the stator assembly is to operate. In one embodiment the stator assembly is arranged to be operated with (e.g. connected to a voltage supply that provides) three or more phases, e.g. six or more phases, e.g. nine phases. Thus, in one embodiment, the method comprises connecting the busbar assembly to the plurality of conductive terminals such that the stator assembly is operable with an AC voltage supply having three or more phases, e.g. six or more phases, e.g. nine phases.

In one embodiment the method comprises connecting each busbar of the busbar assembly to a plurality (e.g. two) of the conductive terminals. In one embodiment each busbar is connected to a plurality (e.g. two) of the (stator windings via their respective) conductive terminals for supplying a same phase of an AC voltage supply to the (these respective plurality of) stator windings. Different busbars may be connected to different phases of the AC voltage supply.

In one embodiment the busbar assembly (or assemblies) is connected to a plurality of the conductive terminals such that a plurality of stator windings are (electrically) connected together per phase of the AC voltage supply, e.g. to form phase windings. Thus, in one embodiment, the method comprises connecting the busbar assembly to a plurality of the conductive terminals so to connect at least four (e.g. at least six, e.g. at least eight) stator windings together for supplying a same phase of an AC voltage supply to these at least four (e.g. at least six, e.g. at least eight) stator windings. In one embodiment the phase windings are connected together to form a neutral point.

In one embodiment the step of connecting the busbar assembly to a plurality of the conductive terminals comprises mechanically connecting (e.g. bolting) the plurality of busbars to the plurality of conductive terminals, such that the (plurality of busbars of the) busbar assembly are electrically connected to the conductive terminals. The conductive terminals may be threaded and the busbars may be connected to the conductive terminals using nuts.

The AC voltage supply may have one or more channels. Thus, for example, when the AC voltage supply has a single channel and three phases, a stator assembly having twelve stator windings may be connected with four stator windings per phase. Similarly, when the AC voltage supply has two channels and three phases, a stator assembly having twenty-four stator windings may be connected with four stator windings per phase per channel.

It will be appreciated that when the stator assembly has a large number of stator windings (and therefore requires a large number of busbars), using a flexible busbar assembly is particularly helpful when connecting the busbar assembly to the conductive terminals of the stator assembly. Such a stator assembly may, for example, be more suited to a slower speed motor.

In one embodiment each of the plurality of busbars is rigid. In one embodiment each of the busbars comprises (e.g. consists of) a conductive material (e.g. metal).

In one embodiment each of the plurality of busbars is longitudinally extended, e.g. its length (between the points at which it is connected to the conductive terminals) is (e.g. significantly) greater than its width and its thickness (the dimensions perpendicular to its length). In one embodiment each of the plurality of busbars has a width (the radial direction, perpendicular to the axis of the stator assembly, when the busbar assembly is connected to the conductive terminals) and a thickness (the axial direction, parallel to the axis of the stator assembly, when the busbar assembly is connected to the conductive terminals), wherein the width is greater than the thickness.

In one embodiment each of the plurality of busbars is curved, e.g. along its length. In one embodiment each of the plurality of busbars comprises a substantially arc shape, e.g. an arc of a circle. In one embodiment the (e.g. plurality of busbars are assembled such that the) busbar assembly is curved, e.g. along its length. In one embodiment the (e.g. plurality of busbars are assembled such that the) busbar assembly comprises a substantially arc shape, e.g. an arc of a circle. In one embodiment the plurality of busbars each lie in the same arc (of the busbar assembly).

In one embodiment the busbar assembly extends through an arc that subtends an angle between 50 degrees and 360 degrees, e.g. between 60 degrees and 330 degrees, e.g. between 70 degrees and 300 degrees, e.g. between 80 degrees and 270 degrees, e.g. between 90 degrees and 240 degrees, e.g. between 100 degrees and 210 degrees, e.g. between 110 degrees and 180 degrees, e.g. between 120 degrees and 150 degrees. Thus, in some embodiments, the busbar assembly extends through an arc that subtends an angle greater than 90 degrees, e.g. greater than 120 degrees, e.g. greater than 150 degrees, e.g. greater than 180 degrees, e.g. greater than 210 degrees, e.g. greater than 240 degrees, e.g. greater than 270 degrees; while, in some embodiments, the busbar assembly extends through an arc that subtends an angle less than 180 degrees, e.g. less than 150 degrees, e.g. less than 120 degrees, e.g. less than 90 degrees.

In one embodiment the method comprises assembling a plurality of busbars into a plurality of busbar assemblies, wherein the plurality of busbars are arranged flexibly relative to each other in each of the busbar assemblies, and connecting the plurality of busbar assemblies to the plurality of conductive terminals. Connecting multiple busbar assemblies may allow the busbar assemblies to extend around the whole circumference of the stator assembly.

In one embodiment each of the plurality of busbars comprises a pair of attachment points (e.g. a lug, e.g. comprising an aperture) for connecting to the conductive terminals of the stator assembly. In one embodiment the pair of attachment points are arranged at the ends of each busbar. In one embodiment the pair of attachment points project (e.g. radially) from the busbar.

The plurality of busbars may be arranged in the busbar assembly in any suitable and desired way, such that the busbar assembly is (pre-)assembled before placing the busbar assembly into the stator assembly and connecting the busbars to the conductive terminals. In one embodiment the step of assembling the plurality of busbars into the busbar assembly comprises arranging the plurality of busbars into a bundle to form the busbar assembly.

In one embodiment the step of assembling the plurality of busbars into the busbar assembly comprises arranging the plurality of busbars into two or more layers to form the busbar assembly. In one embodiment the busbar assembly is assembled from a plurality of busbars arranged in between 2 and 10 layers, e.g. between 4 and 8 layers, e.g. 6 layers.

The plurality of busbars may be arranged in the layers of the busbar assembly in any suitable and desired way. In one embodiment the plurality of busbars are stacked on top of each other in the plurality of layers, e.g. in the direction of their respective thicknesses such that their widths are aligned. In one embodiment the plurality of busbars at least partially overlap with at least some of the other busbars in the busbar assembly.

In one embodiment the busbars are arranged in the busbar assembly such that number of busbars in the busbar assembly is greater than the number of layers of busbars in the busbar assembly. Thus, in some embodiments, one or more (e.g. each) of the layers of the plurality of layers of the busbar assembly comprises a plurality of busbars, e.g. with the plurality of busbars in each layer arranged end to end. In some embodiments the plurality of busbars are arranged in the busbar assembly such that the busbar assembly is longer (e.g. subtends an arc of a greater angle) than each of the plurality of busbars.

In one embodiment the busbar assembly comprises at least 6 busbars, e.g. at least 12 busbars, e.g. at least 18 busbars. In one embodiment the busbars are arranged in the busbar assembly such that each layer of the plurality of layers of the busbar assembly comprises at least 2 busbars, e.g. at least 4 busbars.

The plurality of busbars may be assembled into the busbar assembly in any suitable and desired way to give the busbar assembly its flexibility, e.g. to provide a semi-rigid busbar assembly, for when the busbar assembly is being connected to the conductive terminals. In one embodiment (e.g. when the busbars are rigid) the plurality of busbars are arranged in the busbar assembly so to allow relative movement between (e.g. each of) the plurality of busbars. For example, the plurality of busbars are not rigidly attached (e.g. bonded or affixed) to each other in the busbar assembly, when the busbar assembly is being connected to the conductive terminals. In one embodiment the plurality of busbars are constrained (flexibly) in the busbar assembly, e.g. so that the busbar assembly retains its overall shape but there is an amount of flex between the busbars.

The plurality of busbars may be arranged into the busbar assembly to give the busbar assembly any suitable and desired flexibility. In one embodiment, the method comprises arranging the plurality of busbars into the busbar assembly such that the busbar assembly is flexible in a direction (or directions) perpendicular to the length of the busbar assembly (e.g. parallel to the width of the busbars (and thus width of the busbar assembly)), e.g. so to vary the radius of curvature of the busbar assembly. This may help to connect the busbar assembly to the conductive terminals, which may, for example, be misaligned.

In one embodiment the plurality of busbars are arranged in the busbar assembly such that the radius of curvature of the busbar assembly is able to be increased and/or decreased by up to 5 %, e.g. by up to 10 %, e.g. by up to 15 %.

In one embodiment the step of assembling the plurality of busbars into the busbar assembly comprises arranging a layer of low-friction material (e.g. polytetrafluoroethylene (PTFE)) between (e.g. each of) the two or more layers of the busbar assembly. This may help to allow the busbars to move relative to each other to provide the busbar assembly with its flexibility. In one embodiment the step of assembling the plurality of busbars into the busbar assembly comprises arranging a layer of insulation between (e.g. each of) the two or more layers of the busbar assembly.

In one embodiment the step of assembling the plurality of busbars into the busbar assembly comprises arranging a layer of low-friction material and a layer of insulation between (e.g. each of) the two or more layers of the busbar assembly. In one embodiment the layer of insulation comprises the low-friction material.

In one embodiment the step of arranging a layer of insulation between (e.g. each of) the two or more layers of the busbar assembly comprises coating one or more (e.g. each) of the plurality of busbars with insulation. The insulation (e.g. coating) may comprise a dielectric (e.g. Kapton) tape.

In one embodiment the plurality of busbars in the busbar assembly are flexibly (e.g. movably) connected together. The plurality of busbars may be connected together to assemble the busbar assembly in any suitable and desired way. In one embodiment the method comprises connecting the plurality of busbars together with (e.g. dielectric) lacing tape, e.g. winding lacing tape around the plurality of busbars. The tautness of the lacing tape may be chosen to provide the desired flexibility of the busbar assembly. The lacing tape thus helps to constrain the busbars in an overall arrangement in the busbar assembly while, for example, allowing the busbars to have some flexibility relative to each other.

In one embodiment the step of assembling the plurality of busbars into the busbar assembly comprises applying an adhesive, a bond coating or an epoxy between the (e.g. two or more layers of the) plurality of busbars of the busbar assembly. This helps to connect the plurality of busbars together, to hold them in the busbar assembly. In said embodiment the adhesive, the bond coating or the epoxy is arranged to allow relative movement between (e.g. each of) the plurality of busbars in the busbar assembly.

In said embodiment the adhesive comprises a flexible adhesive, e.g. a silicone based adhesive, e.g. a silicone rubber, e.g. a room temperature vulcanising silicone.

In said embodiment the method comprises curing the adhesive, the bond coating or the epoxy after the busbar assembly has been connected to the plurality of the conductive terminals. This may help to (e.g. rigidly) bond the plurality of busbars to each other in the busbar assembly. The step of curing the adhesive, the bond coating or the epoxy may comprise heating the stator assembly, e.g. by placing the stator assembly in an oven or by applying a current to the stator windings of the stator assembly (which heats up the stator assembly).

Thus, in one embodiment, the adhesive, the bond coating or the epoxy is flexible at a lower temperature and (e.g. irreversibly) rigid at a higher temperature.

The step of assembling the plurality of busbars into the busbar assembly comprises arranging the plurality of busbars in a jig, to form the busbar assembly. The method comprises (e.g. placing the jig into the stator assembly and) connecting the plurality of busbars to the plurality of conductive terminals while the plurality of busbars are in the jig.

The jig is flexible, e.g. so to allow the busbar assembly to be flexible. The method comprises curing the jig after the plurality of busbars have been connected to the plurality of conductive terminals. This may help to (e.g. rigidly) connect (e.g. bond) the plurality of busbars to each other in the busbar assembly.

In one embodiment the method comprises coating (e.g. impregnating) the (e.g. busbar assembly of the) stator assembly with a (e.g. liquid) coating (e.g. varnish), e.g. after the busbar assembly (or assemblies) has been connected to the conductive terminals. This may be performed by dipping the (e.g. busbar assembly of the) stator assembly in the coating. In one embodiment the method comprises curing (e.g. baking) the (e.g. busbar assembly of the) stator assembly to cure the coating, e.g. to form a (substantially) rigid coating. This helps to form a rigid (e.g. busbar assembly of the) stator assembly, so as to minimise the movement and vibrations of the (e.g. busbar assembly of the) stator assembly during operation, which may otherwise damage the (e.g. insulation of the) stator windings, owing to the mechanical constraints imposed on the stator windings during operation of the electric motor.

The disclosure also extends to a method of manufacturing an electric machine comprising the stator assembly described herein. In some embodiments the electric machine comprises an electric generator or an electric motor, e.g. an electric propulsion motor.

In one embodiment the stator assembly is designed for use in an electric motor having a power between 70 kW and 4 MW, e.g. between 100 kW and 2 MW, e.g. between 200 kW and 1 MW, e.g. approximately 0.5 MW.

### BRIEF DESCRIPTION OF DRAWINGS

One or more non-limiting examples will now be described, by way of example only, and with reference to the accompanying figures in which:
Figure 1 shows a stator assembly;
Figure 2 shows a closer view of part of the stator assembly shown in Figure 1;
Figure 3 shows a busbar assembly including multiple busbars;
Figure 4 shows a closer view of the busbar assembly shown in Figure 3; and
Figures 5, 6 and 7 show examples of how busbars may be arranged flexibly relative to each other in a busbar assembly.

### DETAILED DESCRIPTION

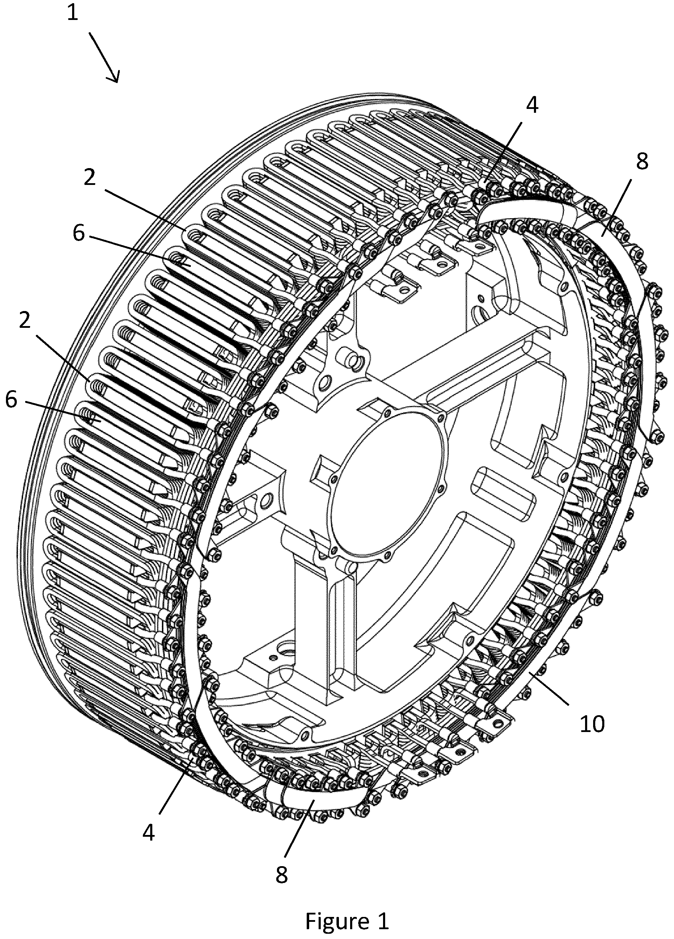

Figure 1 shows a stator assembly 1 including multiple windings 2. Each winding 2 is depicted as a block in Figure 1, not showing the wires in the winding 2. Each winding may be formed from a solid wire or layers of flat wire. Alternatively, each winding may be formed from a multi-strand cable, such as a Litz wire, that contains multiple wires (i.e. strands) that are insulated from one another along at least part of their length (e.g. along the whole length except for at the ends). The (e.g. strands of the) cable may be in electrical communication with one another at the end portions of the (e.g. strands of the) cable, to electrically connect the ends of (e.g. each of the strands of) the cable to a conductive terminal 4.

Each winding may be wound around an electromagnetic core 6 (e.g. an iron core). The ends of each winding 2 (shown here as an individual coil) are electrically connected to a pair of conductive terminals 4. In some embodiments, more than one coil may be wound together.

The conductive terminals 4 may be externally threaded and the busbars may be connected to the conductive terminals 4 using nuts 14. The conductive terminals 4 are arranged on an inner circumference and an outer circumference of the stator assembly 1.

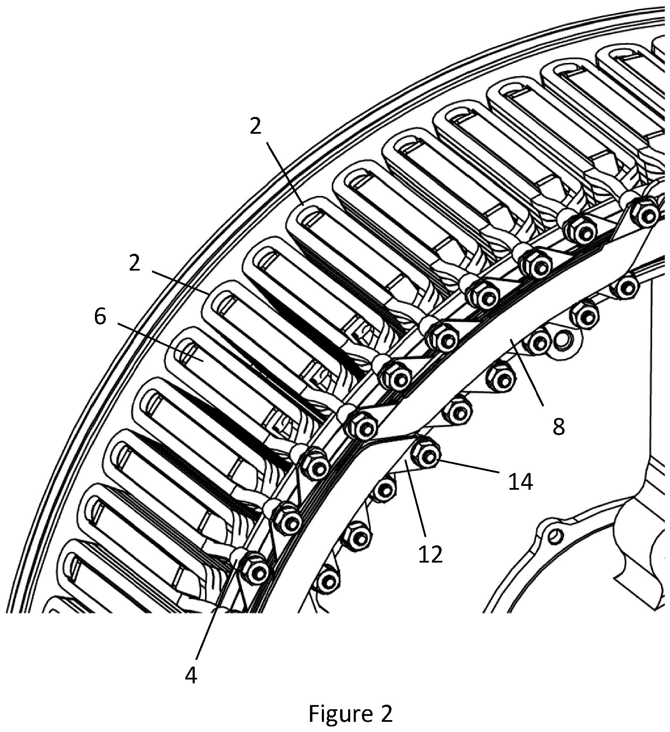

Figure 2 shows a closer view of part of the stator assembly 1 shown in Figure 1. In this example, it can be seen that busbars 8 are bolted onto pairs of conductive terminals 4 from different windings 2 to electrically connect the windings 2.

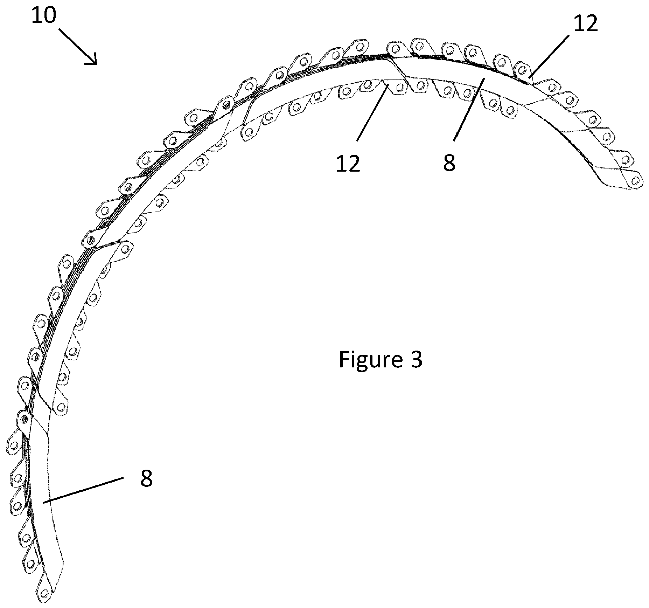

Figure 3 shows two busbar assemblies 10, one stacked on top of the other, and each including multiple busbars 8. Each busbar 8 has a main longitudinal portion that extends around an arc, and two end portions 12 that project radially outwards or inwards. The end portions 12 define an aperture that allows the busbar 8 to fit over the conductive terminals 4 to which the busbar 8 is to be connected. A potting material (not shown) may be used to encapsulate the edges of the busbars.

The busbars 8 are arranged to form an arc-shaped busbar assembly 10, such that the busbar assembly 10 fits into the gap between the inner circumference and the outer circumference of the stator assembly 1 between the conductive terminals 4, and such that the end portions 12 of the busbars 8 substantially align with the conductive terminals 4. Four busbar assemblies 10, for example, are used to connect all of the conductive terminals 4 of the stator assembly 1. In other examples, only two or three busbar assemblies may be used.

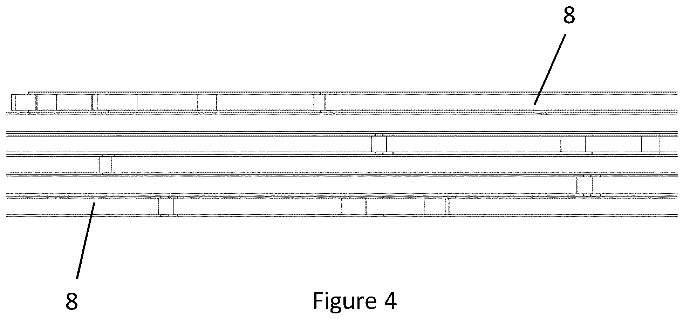

Figures 4 shows a closer view of the busbar assembly 10 shown in Figure 3. Figure 4 shows a plan view, in a direction parallel to the plane of the busbar assembly 10. The busbars 8 are arranged in six layers that allow the necessary connections to be made between the busbars 8 and the conductive terminals 4. Each busbar 8 has a low-friction dielectric coating, such that an electrical connection is not made between the busbars 8 of the busbar assembly 10.

(It should be noted that the number of layers of busbars 8 in the busbar assembly 10 may depend on the number of phases of the AC voltage supply that is being supplied to the stator assembly 1. The busbar assembly 10 may have a number of layers of busbars 8 that is equal to the number of phases, e.g. three layers for three phases, six layers for six phases.)

The busbars 8 are assembled into the busbar assembly 10 before the busbar assembly 10 is fitted into the stator assembly 1 and the end portions 12 of the busbars 8 are connected to the conductive terminals 4. Pre-assembling the busbar assembly 10 makes the process of manufacturing the stator assembly 1 more efficient and less prone to damaging the stator windings 2 and the conductive terminals 4 when fitting the busbar assembly 10.

In order to assist with the fitting of the busbar assembly 10 into the stator assembly 1 and the connection of the end portions 12 of the busbars 8 to the conductive terminals 4, the busbars 8 are assembled into the busbar assembly 10 in a way in which the busbars 8 are arranged flexibly relative to each other in the busbar assembly 10. The flexibility of the busbar assembly 10 helps to make it easier, quicker and less error prone to align and fit the busbar assembly 10 in the stator assembly 1, when mechanically mating the busbar assembly 10 to the conductive terminals 4 of the stator windings 2. The flexibility of the busbar assembly 10 also helps to reduce the force that has to be exerted on the busbar assembly 10 when fitting it into place for connecting to the conductive terminals 4 of the stator windings 2.

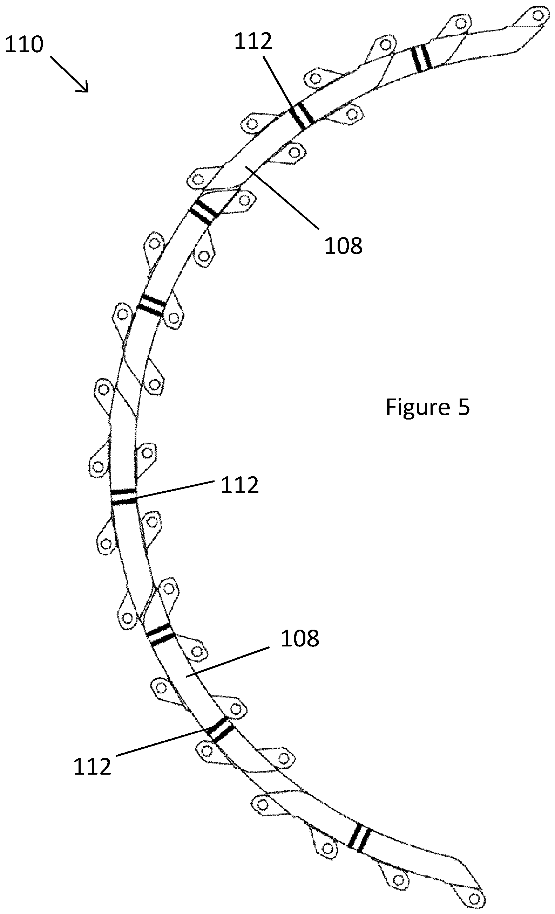

Three examples of how busbars may be arranged flexibly relative to each other in a busbar assembly will now be described, with reference to Figures 5, 6 and 7.

Figure 5 shows a busbar assembly 110 in which the busbars 108 are connected together by lacing tape 112 that is wrapped around the busbars 108 of the busbar assembly 110. The tension of the lacing tape 112 is chosen to determine the amount of movement between the busbars 108 of the busbar assembly 110.

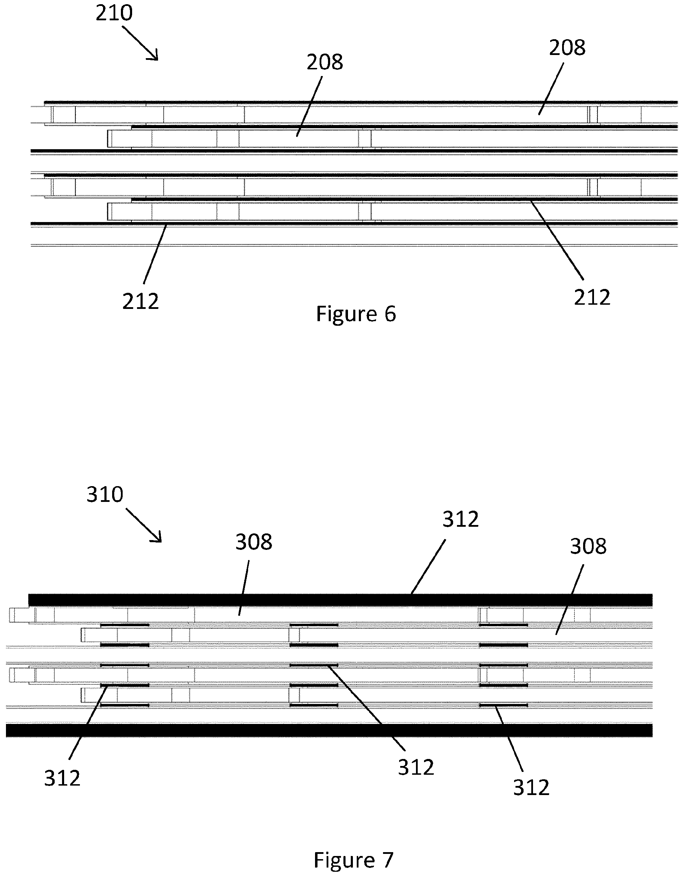

Figure 6 shows a busbar assembly 210 in which the busbars 208 are connected together by an adhesive, a bond coating or an epoxy 212 between the layers of busbars 208 of the busbar assembly 210. The adhesive, bond coating or epoxy 212 is applied in a flexible state to connect the layers of busbars 208 of the busbar assembly 210 but allows the busbars 208 of the busbar assembly 210 to move relative to each other. The adhesive, bond coating or epoxy 212 is then cured to rigidly secure the busbars 208 of the busbar assembly 210 together, after the busbars 208 have been connected to the conductive terminals of the stator assembly.

Figure 7 shows a busbar assembly 310 in which the busbars 308 are assembled together in a flexible jig 312. This allows the busbars 308 to move relative to each other in the busbar assembly 310. The flexible jig 312 is then cured to rigidly secure the busbars 308 of the busbar assembly 310 together, after the busbars 308 have been connected to the conductive terminals of the stator assembly.

Once the busbars have been connected to the conductive terminals of the stator assembly and, e.g., the flexible adhesive, bond coating, epoxy or jig has been cured, the stator assembly is impregnated by dipping the stator assembly in a varnish. The stator assembly is then baked in an oven to cure the varnish. This helps to form a rigid stator assembly.

## Claims

1. A method of manufacturing a stator assembly (1) for an electric machine, the method comprising:
providing a plurality of stator windings (2), each stator winding (2) being connected to a conductive terminal (4);
assembling a plurality of busbars (8) into a busbar assembly (10), wherein the plurality of busbars (8) are arranged flexibly relative to each other in the busbar assembly (10) by arranging the plurality of busbars (8) in a flexible jig (312); and
connecting the busbar assembly (10) to a plurality of the conductive terminals (4) while the plurality of busbars (8) are in the flexible jig (312) and then curing the flexible jig (312).

2. The method as claimed in claim 1, wherein each of the plurality of busbars (8) is rigid.

3. The method as claimed in claim 1 or 2, wherein the step of assembling the plurality of busbars (8) into the busbar assembly (10) comprises winding lacing tape (112) around the plurality of busbars (8).

4. The method as claimed in claim 1 or 2, wherein the step of assembling the plurality of busbars (8) into the busbar assembly (10) comprises arranging the plurality of busbars (8) into two or more layers to form the busbar assembly (10).

5. The method as claimed in claim 4, wherein the step of assembling the plurality of busbars (8) into the busbar assembly (10) comprises arranging a layer of insulation between the two or more layers of the busbar assembly (10).

6. The method as claimed in claim 5, wherein the layer of insulation comprises a low-friction material.

7. The method as claimed in claim 4, 5 or 6, wherein the step of assembling the plurality of busbars (8) into the busbar assembly (10) comprises applying an adhesive or an epoxy (212) between the two or more layers of the busbar assembly (10);
wherein the method comprises curing the adhesive or the epoxy (212) after the busbar assembly (10) has been connected to the plurality of the conductive terminals (4).

8. The method as claimed in any one of the preceding claims, wherein the method comprises connecting the busbar assembly (10) to a plurality of the conductive terminals (4) so to connect at least four of the stator windings (2) together for supplying a same phase of an AC voltage supply to these at least four stator windings (2).

9. The method as claimed in claim 8, wherein the busbar assembly (10) comprises at least 6 busbars (8), e.g. at least 12 busbars (8), e.g. at least 18 busbars (8).

10. The method as claimed in any one of the preceding claims, wherein the method comprises:
applying a coating to the busbar assembly (10); and
curing the coating.

11. The method as claimed in any one of the preceding claims, wherein the busbar assembly (10) comprises an arc that subtends an angle 50 degrees and 360 degrees, e.g. between 60 degrees and 330 degrees, e.g. between 70 degrees and 300 degrees, e.g. between 80 degrees and 270 degrees, e.g. between 90 degrees and 240 degrees, e.g. between 100 degrees and 210 degrees, e.g. between 110 degrees and 180 degrees, e.g. between 120 degrees and 150 degrees.

## Patentansprüche

1. Verfahren zur Herstellung einer Statoranordnung (1) für eine elektrische Maschine, wobei das Verfahren umfasst:
Bereitstellen einer Vielzahl von Statorwicklungen (2), wobei jede Statorwicklung (2) mit einem leitfähigen Anschluss (4) verbunden ist;
Zusammensetzen einer Vielzahl von Stromschienen (8) zu einer Stromschienenanordnung (10), wobei die Vielzahl von Stromschienen (8) flexibel relativ zueinander in der Stromschienenanordnung (10) angeordnet werden, indem die Vielzahl von Stromschienen (8) in eine flexible Vorrichtung (312) angeordnet werden; und
Verbinden der Stromschienenanordnung (10) mit einer Vielzahl der leitfähigen Anschlüsse (4), während sich die Vielzahl von Stromschienen (8) in der flexiblen Vorrichtung (312) befindet, und anschließendes Aushärten der flexiblen Vorrichtung (312).

2. Verfahren nach Anspruch 1, wobei jede der Vielzahl von Stromschienen (8) starr ist.

3. Verfahren nach Anspruch 1 oder 2, wobei der Schritt des Zusammensetzens der Vielzahl von Stromschienen (8) zu der Stromschienenanordnung (10) das Wickeln eines Schnürbandes (112) um die Vielzahl von Stromschienen (8) umfasst.

4. Verfahren nach Anspruch 1 oder 2, wobei der Schritt des Zusammensetzens der Vielzahl von Stromschienen (8) zu der Stromschienenanordnung (10) das Anordnen der Vielzahl von Stromschienen (8) in zwei oder mehr Schichten umfasst, um die Stromschienenanordnung (10) zu bilden.

5. Verfahren nach Anspruch 4, wobei der Schritt des Zusammensetzens der Vielzahl von Stromschienen (8) zu der Stromschienenanordnung (10) das Anordnen einer Isolierschicht zwischen den zwei oder mehr Schichten der Stromschienenanordnung (10) umfasst.

6. Verfahren nach Anspruch 5, wobei die Isolierschicht ein reibungsarmes Material umfasst.

7. Verfahren nach Anspruch 4, 5 oder 6, wobei der Schritt des Zusammensetzens der Vielzahl von Stromschienen (8) zu der Stromschienenanordnung (10) das Aufbringen eines Klebstoffs oder eines Epoxidharzes (212) zwischen den zwei oder mehr Schichten der Stromschienenanordnung (10) umfasst;
wobei das Verfahren das Aushärten des Klebstoffs oder des Epoxidharzes (212) umfasst, nachdem die Stromschienenanordnung (10) mit der Vielzahl der leitfähigen Anschlüsse (4) verbunden wurde.

8. Verfahren nach einem der vorhergehenden Ansprüche, wobei das Verfahren das Verbinden der Stromschienenanordnung (10) mit einer Vielzahl der leitfähigen Anschlüsse (4) umfasst, um mindestens vier der Statorwicklungen (2) miteinander zu verbinden, um diesen mindestens vier Statorwicklungen (2) eine gleiche Phase einer Wechselspannungsversorgung zuzuführen.

9. Verfahren nach Anspruch 8, wobei die Stromschienenanordnung (10) mindestens 6 Stromschienen (8), z. B. mindestens 12 Stromschienen (8), z. B. mindestens 18 Stromschienen (8), umfasst.

10. Verfahren nach einem der vorhergehenden Ansprüche, wobei das Verfahren umfasst:
Aufbringen einer Beschichtung auf die Stromschienenanordnung (10); und
Aushärten der Beschichtung.

11. Verfahren nach einem der vorhergehenden Ansprüche, wobei die Stromschienenanordnung (10) einen Bogen umfasst, der einen Winkel zwischen 50 Grad und 360 Grad, z. B. zwischen 60 Grad und 330 Grad, z. B. zwischen 70 Grad und 300 Grad, z. B. zwischen 80 Grad und 270 Grad, z. B. zwischen 90 Grad und 240 Grad, z. B. zwischen 100 Grad und 210 Grad, z. B. zwischen 110 Grad und 180 Grad, z. B. zwischen 120 Grad und 150 Grad, überspannt.

## Revendications

1. Procédé de fabrication d'un ensemble stator (1) pour une machine électrique, le procédé comprenant :
la fourniture d'une pluralité d'enroulements de stator (2), chaque enroulement de stator (2) étant connecté à une borne conductrice (4) ;
l'assemblage d'une pluralité de barres omnibus (8) en un ensemble de barres omnibus (10), dans lequel la pluralité de barres omnibus (8) sont agencées de manière flexible les unes par rapport aux autres dans l'ensemble de barres omnibus (10) en disposant la pluralité de barres omnibus (8) dans un gabarit flexible (312) ; et
la connexion de l'ensemble de barres omnibus (10) à une pluralité des bornes conductrices (4) pendant que la pluralité de barres omnibus (8) sont dans le gabarit flexible (312) et ensuite le durcissement du gabarit flexible (312).

2. Le procédé selon la revendication 1, dans lequel chacune de la pluralité de barres omnibus (8) est rigide.

3. Le procédé selon la revendication 1 ou 2, dans lequel l'étape d'assemblage de la pluralité de barres omnibus (8) en l'ensemble de barres omnibus (10) comprend l'enroulement d'un ruban de laçage (112) autour de la pluralité de barres omnibus (8).

4. Le procédé selon la revendication 1 ou 2, dans lequel l'étape d'assemblage de la pluralité de barres omnibus (8) en l'ensemble de barres omnibus (10) comprend l'agencement de la pluralité de barres omnibus (8) en deux ou plusieurs couches pour former l'ensemble de barres omnibus (10).

5. Le procédé selon la revendication 4, dans lequel l'étape d'assemblage de la pluralité de barres omnibus (8) en l'ensemble de barres omnibus (10) comprend l'agencement d'une couche d'isolation entre les deux ou plusieurs couches de l'ensemble de barres omnibus (10).

6. Le procédé selon la revendication 5, dans lequel la couche d'isolation comprend un matériau à faible frottement.

7. Le procédé selon la revendication 4, 5 ou 6, dans lequel l'étape d'assemblage de la pluralité de barres omnibus (8) en l'ensemble de barres omnibus (10) comprend l'application d'un adhésif ou d'un époxy (212) entre les deux ou plusieurs couches de l'ensemble de barres omnibus (10) ;
dans lequel le procédé comprend le durcissement de l'adhésif ou de l'époxy (212) après que l'ensemble de barres omnibus (10) ait été connecté à la pluralité des bornes conductrices (4).

8. Le procédé selon l'une quelconque des revendications précédentes, dans lequel le procédé comprend la connexion de l'ensemble de barres omnibus (10) à une pluralité des bornes conductrices (4) de manière à connecter ensemble au moins quatre des enroulements de stator (2) pour fournir une même phase d'une alimentation en tension alternative à ces au moins quatre enroulements de stator (2).

9. Le procédé selon la revendication 8, dans lequel l'ensemble de barres omnibus (10) comprend au moins 6 barres omnibus (8), par exemple au moins 12 barres omnibus (8), par exemple au moins 18 barres omnibus (8).

10. Le procédé selon l'une quelconque des revendications précédentes, dans lequel le procédé comprend :
l'application d'un revêtement sur l'ensemble de barres omnibus (10) ; et
le durcissement du revêtement.

11. Le procédé selon l'une quelconque des revendications précédentes, dans lequel l'ensemble de barres omnibus (10) comprend un arc qui sous-tend un angle compris entre 50 degrés et 360 degrés, par exemple entre 60 degrés et 330 degrés, par exemple entre 70 degrés et 300 degrés, par exemple entre 80 degrés et 270 degrés, par exemple entre 90 degrés et 240 degrés, par exemple entre 100 degrés et 210 degrés, par exemple entre 110 degrés et 180 degrés, par exemple entre 120 degrés et 150 degrés.
